Europäisches Patentamt

(19) European Patent Office

Office européen des brevets

(11) Publication number : **0 344 844 B1**

(12) **EUROPEAN PATENT SPECIFICATION**

(45) Date of publication of patent specification :
05.02.92 Bulletin 92/06

(51) Int. Cl.⁵ : **A01J 25/16**

(21) Application number : **89201341.8**

(22) Date of filing : **26.05.89**

(54) **Cheese board.**

(30) Priority : **30.05.88 NL 8801382**

(43) Date of publication of application :
**06.12.89 Bulletin 89/49**

(45) Publication of the grant of the patent :
**05.02.92 Bulletin 92/06**

(84) Designated Contracting States :
**BE DE ES FR IT NL SE**

(56) References cited :
**CH-A- 408 521
NL-A- 6 712 209
NL-A- 8 301 954
NL-A- 8 503 384**

(73) Proprietor : **AREND B.V.
Heembadweg 3
NL-9561 CZ Ter Apel (NL)**

(72) Inventor : **Dijkhuizen, Gezinus Henderikus
Aldo
Ruitenkamp 62
NL-9561 LG Ter Apel (NL)**

(74) Representative : **de Wit, Gerard Frederik, Ir. et
al
Octrooi- en Merkenbureau De Wit B.V.
Breitnerlaan 146
NL-2596 HG Den Haag (NL)**

# Description

The invention relates to a cheese board with aeration openings, as defined in the preamble of claim 1.

Such a cheese board is known from the Netherlands Patent Application NL-A-8301954. This shows a cheese support of steel in which cups have been pressed which are provided with perforations. Further in practice plane plates are known which are provided with perforations.

Using such-like cheese boards in for instance so-called storage warehouses induces some disadvantages. First thereof is that the cheese at the locations of the perforations desiccates faster than between them, which results in shallow recesses at the location of the perforations. Moreover the holes pattern remains well visible.

The rind forming occurs at the location of a hole in another way than at the location of the interstices between the holes, so that an optimum rind forming over the complete surface of the cheese cannot be obtained.

Aeration of the cheese surface between the perforations is impossible, because there the cheese contacts the material of the board. Aeration at the location of the perforations is hampered by the thickness of the sheet on which the cheese lays. Thin plates are only possible in the form of steel plates in which holes have been drilled or stamped. This now creates the possibility of burrs which could damage the plastification layer of the cheese and by means of adherence of particles of this layer would impede cleaning. Application of thicker sheets would impede seriously the air circulation in the perforations.

The invention provides a solution of the above problems by the features indicated in the characterizing part of claim 1.

A main surface of a board is its upper or lower surface but not any edge of the board itself or of large openings made in the board. The term continuous indicates that the pattern covers all the portions of the board which face a cheese.

The effect of the invention is a high rind quality with no annoying prints or damages. This result is obtained by using a large number of small convex support areas.

It is remarked that from the Swiss Patent Specification CH-A-408.521 a cheese support is known having ribs bearing the cheese. No perforations are present so that even if an air current would take place between the cheese, the board and the ribs any desiccation capability of the air would decrease in the direction of the current.

Netherlands Patent Application NL-A-6712209 shows a cheese board having a spiral groove below a cheese laid on the board. When air is passed through said groove its desiccation capability is even more strongly exhausted than with CH-A-408.521.

Finally the Netherlands Patent Application NL-A-8503384 shows a cheese board having large openings for receiving spherical cheeses the rim of these openings being provided with a groove pattern in order to form air ducts adjacent a cheese laid on such an opening. The grooves are small and the ribs between them are depicted with a flat upper surface as far as can be deduced from the drawing. Air circulation in the grooves is rather reduced due to the small cross-section shown and is enhenced by holes having a diameter which equals about the width of two ribs and a groove there between, so that may be concluded that the rind will be different at the large lower surface of the cheese, at the holes in the rim of these large openings and at at least the middle portions of the ribs. The total surface on which these ribs may be applied is rather small, so that prints or other damages of the cheese rind may occur, certainly if the ribs would be convex. Further any shrink movement of the cheese would lead to let any convex rib of a length equalling the length over which the cheese engages these ribs cut into the cheese rind.

With the invention the air passing the openings can flow around the protuberances and by reason hereof obtain a better and flowing contact with the cheese surface.

Moreover cheese has the tendency to shrink in a storage warehouse. This means that the cheese surface shifts somewhat with respect to the protuberances, so that these will engage the cheese at other locations. Because of the convexity of the upper side of the protuberances the cheese will be lifted somewhat from the protuberances which improves the aeration and the homogenity of the cheese rind.

Though the dimensions of the protuberances and their mutual distance are not subjected to critical limits, it is desirable with the invention, that the whole cheese surface is exposed to almost identical conditions. For this reason it is undesirable to lay a cheese on a few protuberances. Accordingly it is with application of the invention preferably provided that the protuberances have a distance centre to centre of 1 to 6 mm and a diameter of 0,75 to 4 mm.

According to a further elaboration of the invention it is provided that the convex surface has a radius of curvature in the region of 0,4 to 5 mm.

Because with the invention a continueous flow occurs through the openings it is not necessary that the thickness of the cheese board is limited any more. Accordingly a cheese board of plastic material according the invention has preferably a thickness of more than 3 mm. Of course a suchlike cheese board may be reinforced with stiffening ribs, girders or suchlike. Also it is possible to make in a way known per se the cheese board according to the invention at both sides suitable for supporting cheese, wherewith it also is possible to have at the one side a plane surface and at the other a surface with cup shaped recesses applied in it.

With application of the invention it is preferred that the protuberances are located in a regular pattern, because then the most regular support of the cheese is obtained. Therewith the openings are preferably located in a pattern complementary to and interwoven with the protuberances pattern, such as a protuberances pattern according equilateral triangles, rectangles or hexagons with the openings always in the centre of gravity of a suchlike figure.

In the following the invention will be elucidated on hand of the drawing, in which :

Figure 1 is a partial plan view of a cheese board according the invention ;

Figure 2 shows a cross-section over the line II-II; and

Figure 3 is a cross-section over the line III-III.

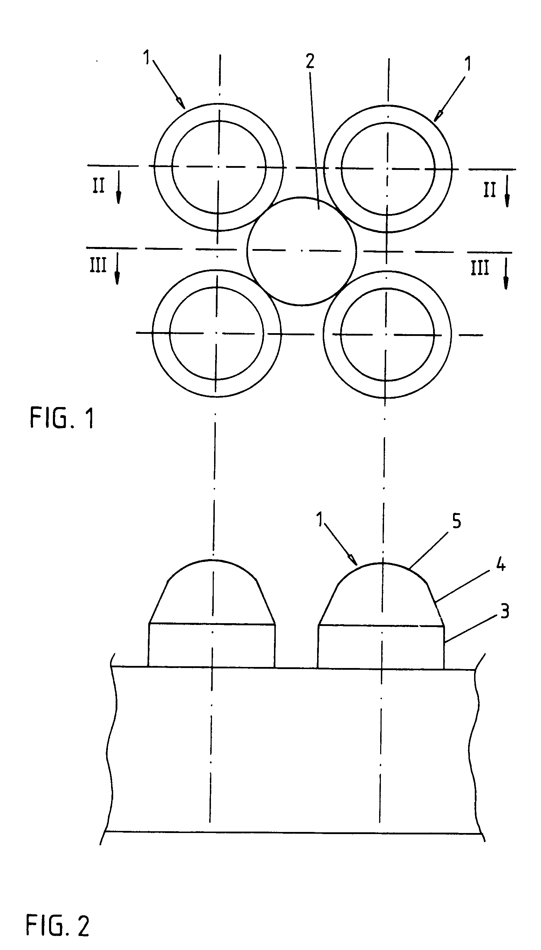

In figure 1 a plurality of protuberances 1 is visible in plan view, which are located at the corners of squares, wherewith in the centres of the squares openings 2 are located.

As more clearly appears from figure 2 in this case the protuberances have at their lower side a cylindrical portion 3 on which a truncated cone portion 4 is located which is ended by a sphere cap 5. In the shown embodiment the portion 3 has a height of 1 mm, the portion 4 also a height of 1 mm and the sphere cap with respect to the latter a height of 0,5 mm, wherewith the radius of curvature is 1,5 mm and the centre of curvature is located in the centre of the circle through the upper surface of the cylindrical portion 3.

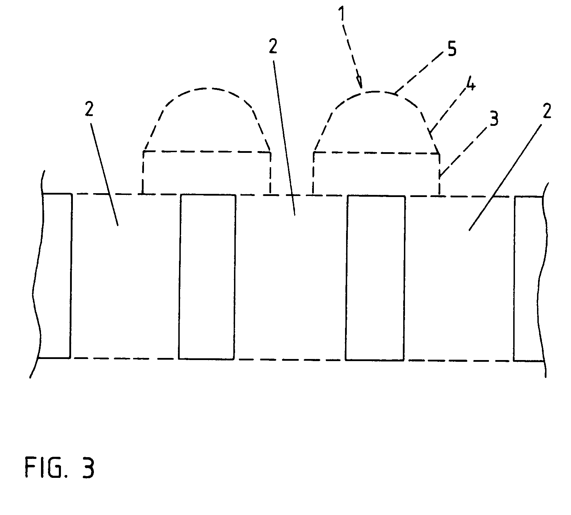

In fig. 3 a cross-section through an opening is visible, which in this case has a diameter of 2,6 mm. The thickness of the plate is 4 mm.

Of course for discharging the plates from their mould. The cylindrical portions 3 may be slightly tapered.

The board according to the invention can be manufactured in the usual dimensions and be reinforced along its edges, which may be done as well with co-cast ribs of plastic material as with steel, preferably stainless steel edge profiles.

Also a cheese board according to the invention may have a two-layer structure, wherewith for instance one of the layers may be provided with cups and the total thickness of the board may be some centimeters.

Though the shown openings have a circular configuration they may have other horizontal cross-sectional forms, for instance octagonal or hexagonal, which may be an advantage, because a mould for moulding the cheese board in that instance can be cheaper manufactured by removing the interspaces between the pins which form the counterpart of the openings, so that the mould part from which these pins protrude forms one piece with these pins.

Finally it will be obvious that the cheese board according to the invention may be used not only for supporting cheeses, but also to keep them submerged in water or brine, in which case it provides the same advantages with respect to the cheese-liquid contact as with the cheese air contact when supporting the cheese.

## Claims

1. Cheese board having a main surface to support cheeses, said main surface being plane or provided with cup shaped depressions adapted to a cheese's form, openings (2) passing through the board, characterized in that the main surface is provided with a continuous pattern of protuberances (1 ; 3, 4, 5) which have dimensions in a plane parallel to the main surface at the location of the considered protuberances, which are smaller than the length over which the cheese would engage the board if no protuberances were present and leave free space for air circulation all around said protuberances, which have convex upper surfaces.

2. Cheese board according to claim 1, characterized in that the protuberances (1) have a distance centre to centre of 1 to 6 mm and a diameter of 0,75 to 4 mm.

3. Cheese board according to claim 1 or 2, characterized in that the convex surface (5) has a radius of curvature in the region of 0,4 to 5 mm.

4. Cheese board according to one or more of the preceding claims, characterized in that it is made of plastic material and has a thickness of more than 3 mm, apart from the protuberances.

5. Cheese board according to one or more of the preceding claims, characterized in that the protuberances are applied in a regular pattern and the openings in a pattern which is complementary to it and interwoven with it, such as a protuberances pattern according equilateral triangles, rectangles or regular hexagons and the openings in the centres of gravity of the triangles, rectangles and hexagons respectively.

## Patentansprüche

1. Käsebrett mit einer Hauptfläche um Käse zu unterstützen, die flach oder mit beckenförmigen Erniedrigungen, die der Form einer Käse angepasst sind, versehen ist, wobei Löcher (2) durch das Brett gehen, dadurch gekennzeichnet, dass die Hauptfläche mit einem durchgehenden Muster von hervorstehenden Teilen (1 ; 3, 4, 5) versehen ist, die in einer Fläche parallel zur Hauptfläche Abmessungen haben, die kleiner sind als die Länge über welche die Käse das Brett berühren wurde falls keine hervorstehenden Teile anwesend wären und die ein Raum für Luftzirkulation um die hervorstehenden Teile herom frei halten, welche hervorstehenden Teile eine konvexe obere Oberfläche haben.

2. Käsebrett nach Anspruch 1, dadurch gekennzeichnet, dass die hervorstehenden Teile (1) eine Distanz von Mitte zur Mitte voneinander haben von 1 bis 6 mm und einen Durchmesser von 0,75 bis 4 mm.

3. Käsebrett nach Abspruch 1 oder 2, dadurch gekennzeichnet, dass die konvexe Oberfläche (5) eine Krümmungsradius hat im Bereich von 0,4 bis 5 mm.

4. Käsebrett nach einem oder mehreren der vorangehenden Ansprüche, dadurch gekennzeichnet, dass es von Kunststoff ist und eine Dicke hat von mehr als 3 mm, abgesehen von den hervorstehenden Teilen.

5. Käsebrett nach einem oder mehreren der vorangehenden Absprüche, dadurch gekennzeichnet, dass die hervorstehenden Teile in einer regelmässigen Muster angeordnet sind und dass die Löcher in einem Muster angeordnet sind, das komplementär dazu und damit verwebt ist, wie ein Muster von hervorstehenden Teilen mit gleichseitigen Dreiecken, Rechtecken oder regelmässigen Sechsecken und die Löcher in den Schwerpunkten der Dreiecken, Rechtecken bezugsweise Sechsecken.

## Revendications

1. Planche à fromage ayant une surface principale pour supporter des fromages, ladite surface principale étant plane ou comportant des creux en forme de coupelles adaptés à une forme de fromage, des ouvertures (2) traversant la planche, caractérisée en ce que la surface principale présente une configuration continue de protubérances (1, 3, 4, 5) qui, dans un plan parallèle à la surface principale à l'emplacement des protubérances considérées ont des dimensions inférieures à la longueur sur laquelle le fromage devrait venir en contact avec la planche s'il n'y avait pas de protubérance, et qui laisse un espace libre pour la circulation de l'air tout autour desdites protubérances, ces protubérances ayant des surfaces supérieures convexes.

2. Planche à fromage selon la revendication 1, caractérisée en ce que les protubérances (1) ont une distance entre axes de 1 à 6 mm et un diamètre de 0,75 à 4 mm.

3. Planche à fromage selon l'une des revendications 1 ou 2, caractérisée en ce que la surface convexe (5) présente un rayon de courbure situé entre 0,4 et 5 mm.

4. Planche à fromage selon une ou plusieurs des revendications précédentes, caractérisée en ce qu'elle est fabriquée en matière plastique et en ce qu'elle a une épaisseur de plus de 3 mm, sans compter les protubérances.

5. Planche à fromage selon une ou plusieurs des revendications précédentes, caractérisée en ce que les protubérances sont disposées selon une configuration régulière et les ouvertures selon une configuration qui est complémentaire de la précédente et qui est imbriquée avec elle, comme par exemple une configuration de protubérances disposées selon des triangles équilatéraux, des rectangles ou des hexagones réguliers, et des ouvertures disposées aux centres de gravité des triangles, des rectangles et des hexagones respectivement.

FIG. 1

FIG. 2

FIG. 3